# EUROPEAN PATENT SPECIFICATION

(11) **EP 3 763 188 B1**
(45) Date of publication and mention of the grant of the patent: **16.08.2023**
(21) Application number: 20184199.6
(22) Date of filing: 06.07.2020
(51) Int. Cl.: A01D 17/10, A01D 33/08, B07B 1/10

(54) **ROOT CROP HARVESTER**
HACKFRUCHTERNTEMASCHINE
MACHINE DE RÉCOLTE DE RACINES

(30) Priority: 10.07.2019 GB 201909914
(43) Date of publication of application: 13.01.2021
(73) Proprietor: Agri-Web Limited, Bangor, County Down BT19 7TA (GB)
(72) Inventor: Shanks, Anne, Newtownards, County Antrim BT23 8RN (GB)
(74) Representative: MacLachlan & Donaldson

(56) References cited:
- EP-A1- 2 218 318
- DE-A1-102004 045 487
- FR-A1- 2 332 070
- GB-A- 689 046
- GB-A- 2 369 338
- SU-A1- 1 618 320
- US-A1- 2007 289 848

## Description

### Field of the Invention

The present invention relates to the field of root crop harvesting, in particular to a root crop harvester having a cleaning apparatus for harvested root crop such as potatoes, carrots, flower bulbs, celeriac, turnips, onions and the like.

### Background to the invention

Root crop is generally harvested using machinery which digs up the crop and then separates it from soil clods and other debris as it progresses though the harvester to a collection point such as a trailer, a bunker, a box filler or the like.

In ideal harvesting conditions, the crop should reach the collection point having sustained little or no damage as well as being relatively clean and soil free.

There are problems with prior art harvester machinery in both wet and dry conditions. In wet conditions, mud is sticky and hard to remove. It clogs machinery and prevents cleaning systems from working effectively. In dry conditions, soil quickly falls away from the crop being harvested, leaving the crop to progress through prior art machinery sustaining scuffs, skin damage and bruising. In attempts to reduce damage, farmers often resort to watering the ground to raise moisture levels in the soil to slow the soil separation process. This can be a costly process.

The cleaning/soil separating system on the majority of conventional root crop harvesters has changed little over the years with most soil separation being carried out by steel webs which have a conveyor comprising steel bars riveted to two side belts and a middle belt. The steel bars are riveted at equal distances apart allowing the crop to be carried up the web and the soil to pass through the space between the bars. Significant agitation of the webs is needed to dislodge the soil from the crop, particularly in wet conditions, and this can cause considerable crop damage and bruising. In dry conditions soil falls easily through the bars leaving the crop to be carried along the webs with no protection, so again bruising is a considerable problem leading to crop wastage and further storage problems.

In attempts to reduce damage, steel webs of prior art machines have either been provided with pintle rubber fingers, replaced with deformable fluted rollers and Ebonite or steel clod rollers, or alternatively replaced with steel rollers bearing a continuum of star wheels. However, these have had limited success in wet conditions as they become clogged with mud and furthermore can add substantially to the overall weight of the machine.

Harvesters have become bigger and heavier over the years. It is thought by those skilled in the art that these heavy machines do significant damage to the subsoil and field drains which can lead to poor drainage and an increased risk of flooding in wet weather.

It is therefore an object of the present invention to provide improved apparatus for cleaning harvested root crop, especially potatoes, the apparatus alleviating the above-mentioned disadvantages and/or providing a suitable alternative.

The closest prior art is that shown and described in EP2218318A1 (BASTRIJS B.V.) which discloses a root crop harvester according to the preamble of claim 1.

### Summary of the Invention

In a first aspect, the invention provides a root crop harvester including cleaning apparatus for separating soil from harvested root crop, the apparatus comprising an upper conveying means and a substantially parallel lower conveying means, each conveying means independently comprising a driven endless belt, wherein each belt independently is provided with apertures in rows substantially parallel to each other and wherein the upper belt rows are not parallel to the lower belt rows.

In use, crop is carried between the upper and lower conveying means from an infeed end to a discharge end of the apparatus. Preferably, the infeed end is lower than the discharge end such that the upper and lower conveying means create an inclined path for the crop. The apertures allow soil to fall through the belts leaving the crop to carry on to the discharge end. The discharge end is optionally a collection point such as a trailer, a bunker, a box filler or the like.

The apertures create ridges in the belts. As a result, the apertures prevent the crop rolling back along the lower conveying means.

The skewed position of the rows of apertures in the lower belt with respect to the rows of apertures in the upper belt creates a tumbling action as the harvested crop, e.g. potatoes, moves along the conveying means.

The skewed position of the rows of apertures of one belt in relation to those of the other belt also ensures that the crop is evenly dispersed across the lower conveying means and is not prematurely discarded from the apparatus.

The apparatus preferably further comprises upstanding side members adjacent the lower belt. The side members further assist in preventing crop from prematurely falling from apparatus.

The substantially parallel rows of apertures preferably form a diagonal pattern, particularly preferably with the pattern of the upper belt being the reverse to that of the lower belt.

In a particularly preferred embodiment, the rows of the lower belt are at an angle of about 60 degrees with respect to the rows of the upper belt.

The apertures are preferably elongate, particularly preferably substantially rectangular, oval or diamond shaped, e.g. in the form of substantially rectangular slots. However, this is not to be considered limiting and any other aperture shape is included within the scope of the invention.

Without being bound by theory, the inventor believes the preferred elongate nature of the apertures allows the crop to rotate and move more freely when in contact with the upper belt. This prevents crop becoming stuck which may occur if the belts are alternatively provided with round or square apertures. The elongate nature of the apertures also allows mud to be expelled more easily as the belts move.

The elongate apertures of the lower belt are preferably provided in parallel rows at an angle of from about 10 degrees to about 80 degrees to the direction of lower belt travel, particularly preferably from about 30 degrees to about 60 degrees, e.g. 45 degrees.

Additionally or alternatively, the elongate apertures of the upper belt are preferably provided in parallel rows at an angle of from about 100 degrees to about 150 degrees to the direction of lower belt travel, e.g. 120 degrees.

The elongate apertures of the upper belt are preferably at an angle of about 60 degrees with respect to the elongate apertures of the lower belt.

In a particularly preferred embodiment, the apertures of the lower and upper belts are elongate rectangular slots and the rows of the lower belt are at an angle of about 60 degrees to the direction of belt travel and optionally about 60 degrees with respect to the rows of the upper belt. This embodiment further prevents crop rolling back in the opposite direction from the direction of travel of the belt, especially if the crop is travelling upwards due to elevation of the discharge end of the apparatus with respect to the infeed end, and allows maximum crop tumbling action when the crop is in contact with the upper and lower belts.

Less preferably, the rows are vertical or horizontal, i.e. perpendicular or parallel to the direction of belt travel, respectively. Vertical rows of apertures may reduce the carrying capacity of the belt, increase the propensity for roll back of the crop and diminish crop tumbling action thus reducing soil separation. Horizontal rows of apertures may increase the carrying capacity of the belt, reduce the propensity for roll back of the crop but diminish crop tumbling action thus again reducing soil separation.

For both horizontal and vertical rows of apertures, the tumbling action of the crop between the upper and lower belts would be in one plane only, that is, in the direction of travel of the belt. By positioning the rows of apertures of the lower belt at an angle to the direction of travel of the belt and opposite and opposing angles to the rows of apertures of the upper belt, maximum rotation of the crop can be achieved while maintaining the flow of crop along the conveying means and maximising soil separation.

The apertures are preferably each of a size smaller than the minimum size of crop, e.g. potatoes, deemed marketable so that undersize potatoes and earth, small stones, etc. may fall through the belt and thereby be separated from the harvested crop. Suitable aperture sizes for potatoes are in the range of from about 0.5cm to about 12cm in diameter. Thus the diagonal of an elongate slot aperture is ideally in the range of from about 0.5cm to about 12cm in length, preferably from about 1.0cm-10.5cm. For example, slots may be about 3cm x10 cm in size. However, this is not to be considered limiting and other aperture sizes are contemplated within the scope of the invention.

The apertures of each belt independently are preferably of uniform size. The apertures of the upper belt are preferably of the same size as those of the lower belt.

In a preferred embodiment, the lower conveying means is longer than the upper conveying means such that there is an exposed infeed area at one end of the lower conveying means, i.e. such that the infeed area is not located directly beneath the upper conveying means.

Additionally or alternatively, the infeed area is preferably lower than the discharge area. That is, in use, in order to reach the optimum height to allow crop to be deposited at a collection point after cleaning by the apparatus, the apparatus is preferably set at an angle with the discharge end higher than the infeed end. This allows for the elevation of crop from an infeed area to a suitable height for transfer to the collection point.

Preferably, each belt independently is made of rubber or other polymers, particularly preferably synthetic rubber such as styrene butadiene rubber, or rubber composite, e.g. neoprene, nitrile, styrene butadiene rubber. This ensures that the apparatus is lightweight to mitigate problems with the subsoil caused by the heavy prior art machinery which requires steel webs and agitation thereof. Each belt independently is especially preferably made of agricultural grade standard black rubber.

Furthermore, use of rubber belts as an alternative to conventional steel web conveyors eliminates damage during crop and soil separation and ensures the belts will function in all conditions, e.g. dry field conditions and wet field conditions.

The belts are each independently preferably driven by respective hydraulic motors. However, this is not to be considered limiting and other means of propulsion may be used to drive the belt.

The upper and lower belts preferably run at different speeds to each other, with the lower belt preferably running at a higher speed than the upper belt. This difference in speed assists in the rotation of the harvested crop as it is carried along the conveying means, allowing soil and/or mud to be removed from the surface of the crop as it rotates. In use of the apparatus, soil and mud is removed from the crop, falls through the apertures in the belts and is preferably discarded from the apparatus. The cleaned crop, i.e. crop substantially free of soil or other debris, can then be deposited at a collection point.

The speed of the belts can be varied to make cleaning more or less aggressive, i.e. to suit the soil conditions at the time of harvesting and the size or yield of the crop. The speed of the each belt independently is preferably controlled by hydraulic motors.

Alternatively or additionally, in order to improve separation in wet conditions, the upper belt is preferably adapted to run in the reverse direction to the lower belt. This has the result that rotation of the crop is increased, i.e. allowing the belts to travel in opposite directions increases the tumbling action of the crop as the crop is carried up the lower belt, further facilitating the removal of soil and/or mud.

In a particularly preferred embodiment, the upper belt is adapted to run in the reverse direction to the lower belt with the lower belt travelling faster than the upper belt.

Conversely, in dry conditions, the belts preferably travel in the same direction at varying speeds. This allows the crop to reach the collection point with minimal skin damage and/or bruising.

In a preferred embodiment, the apparatus further comprises one or more scraper bars positioned on the underside of the lower belt and/or at one end of the upper conveying means, particularly preferably a plurality of scraper bars are positioned on the underside of the lower belt. Each scraper bar independently is adjacent the conveyor belt surface to scrape off material adhering to the belt. When positioned on the underside of the lower belt, the scraper bars also provide support for the lower belt and ensure an even surface across the belt, preventing sagging of the lower belt and maintaining the strength and integrity of the belt to ensure its prolonged use.

There is no set number of scraper bars, however, a plurality of scraper bars is preferably used. Such scraper bars are preferably placed at regular intervals on a frame, to expel soil and other debris from the apparatus and to prevent soil build up around the belt drive. The amount of soil and/or mud expelled through the apertures will vary depending upon harvesting conditions, with more soil being expelled through the apertures in the lower belt than through those in the upper belt.

When a plurality of scraper bars are used, these are preferably spaced a distance of from about 100mm to 1000mm to each other, e.g. 520mm.

The scraper bars are preferably made of a material selected from among metal, e.g. mild steel, rubber and plastic, e.g. polyurethane.

The apparatus is preferably for attachment to a separate propulsion unit so as to form a root crop harvester. In this embodiment, the only steel web required is a short intake web (also known as a digging web) at the front of the harvester, i.e. adjacent the infeed area of the apparatus.

Accordingly, the apparatus according to the invention obviates the need for all but one steel web on the propulsion unit to which it is attached. Agitation of this digging web is not required.

By obviating the need for heavy steel webs, damage to the subsoil and to the crop is avoided.

The apparatus is particularly preferably for mounting onto a tractor. The tractor mounted apparatus results in an easily manoeuvrable root crop harvester capable of operating in wet or dry field conditions.

In another aspect, the invention provides a root crop harvester comprising the apparatus described herein. The root crop harvester may be self-propelled or coupled with a tractor or like propulsion unit.

### Brief Description of the drawings

Certain preferred embodiments of the present invention will now be described, by way of example only, with reference to the accompanying drawings in which:
Figure 1 shows a perspective view of a preferred cleaning apparatus according to the invention for separating soil from harvested root crop;
Figure 2A shows a side view of the apparatus shown in Figure 1;
Figure 2B shows an enlarged view of the circled portion labelled A in Figure 2A;
Figure 2C shows an enlarged view of the circled portion labelled B in Figure 2A;
Figure 2D shows an end view of the apparatus shown in Figure 1;
Figure 3 shows a schematic perspective view of a preferred root crop harvester according to the invention.
Figures 4A and 4B show a plan view and perspective view, respectively, of preferred scraper bars for installation below the belt of the lower conveying means;
Figures 5A and 5B show a plan view and perspective view, respectively, of a preferred aperture shape and arrangement according to the invention;
Figure 6A shows a perspective view of another preferred cleaning apparatus according to the invention for separating soil from harvested root crop;
Figure 6B shows an enlarged view of the circled portion labelled A in Figure 6A; and
Figure 6C shows an enlarged view of the circled portion labelled B in Figure 6A.

### Detailed Description

Various embodiments of the present invention will be described in detail with reference to the drawings, where like reference numerals represent like parts and assemblies throughout the several views.

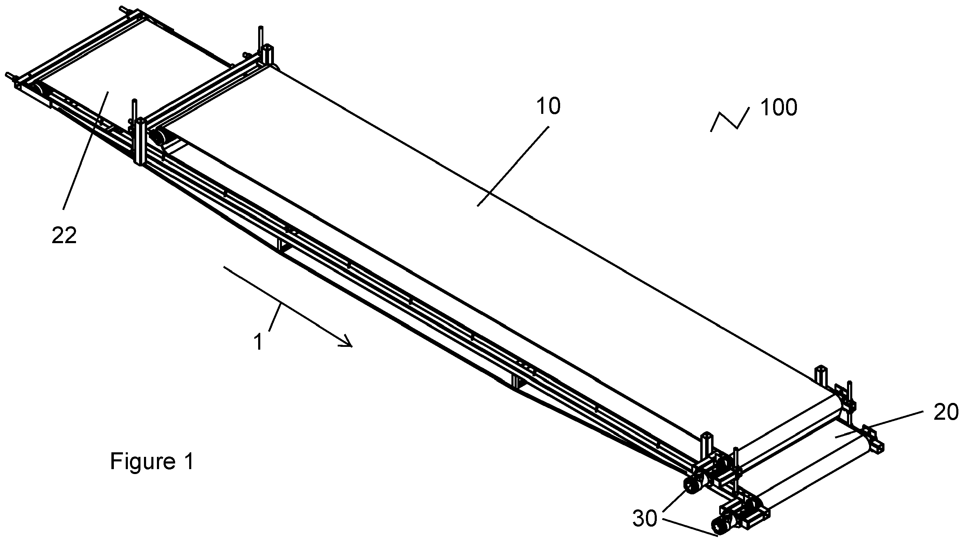

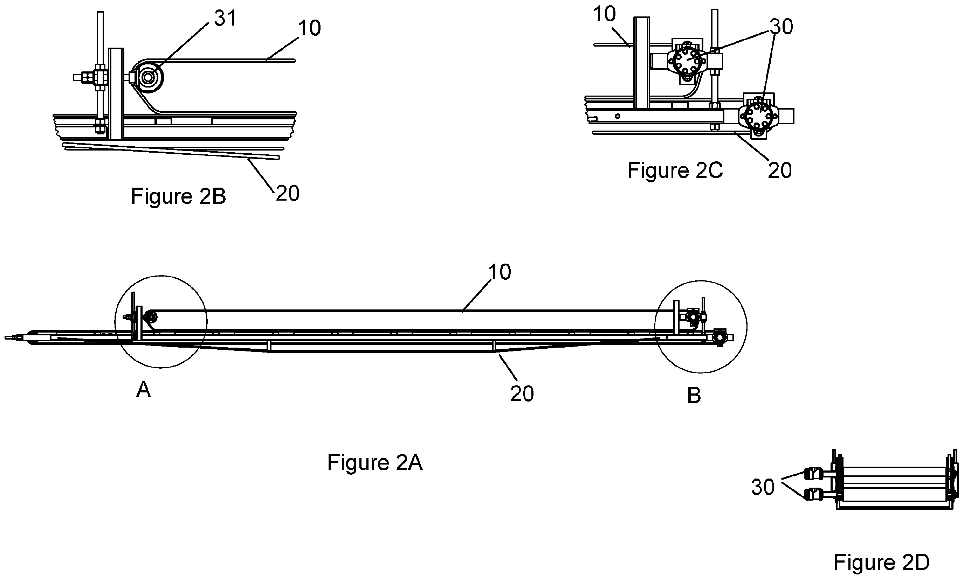

Referring to the drawings and especially to Figures 1 and 2A to 2D, there is shown a preferred cleaning apparatus according to the invention for separating soil from harvested root crop (not shown), especially potatoes, the apparatus generally referred to by the reference numeral 100 and comprising two perforated rubber belts 10, 20 running on rollers and driven by hydraulic motors 30, wherein one perforated belt 10 is above the other perforated belt 20. Upper belt 10 is a loose hanging belt so that it is in contact with the crop being carried on lower belt 20 along the length of belt 10. In the embodiments shown in the Figures, upper belt travels around a wing pulley 31. In an alternative embodiment, not shown, upper belt 10 travels around a cage roller.

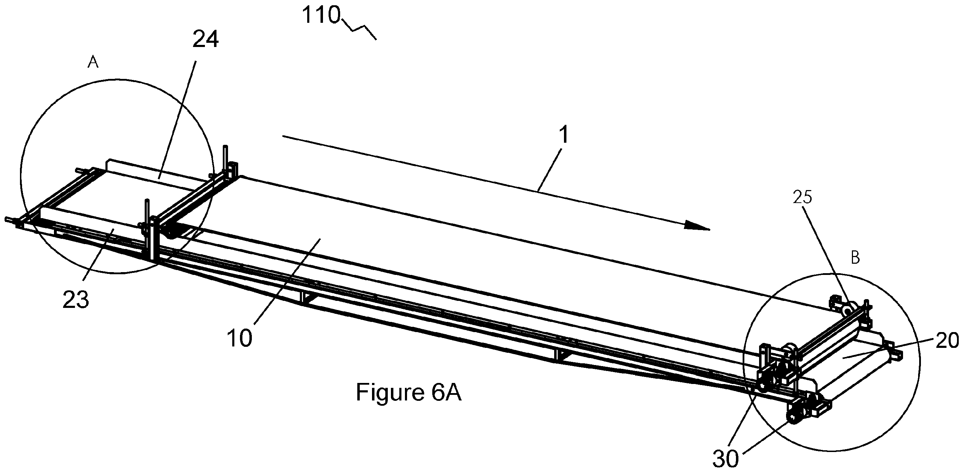

Another preferred cleaning apparatus according to the invention for separating soil from harvested root crop (not shown), is shown in Figures 6A to 6C, the apparatus generally referred to by the reference numeral 110 and differing from apparatus 100 in that it further comprises pinch roller 25 and two upstanding side members 23, 24 adjacent lower belt 20 and. Side members 23, 24 further assist in preventing crop from prematurely falling from apparatus 200. Pinch roller 25 is used to pinch upper belt 10 onto a drive roller powered by hydraulic motor 30.

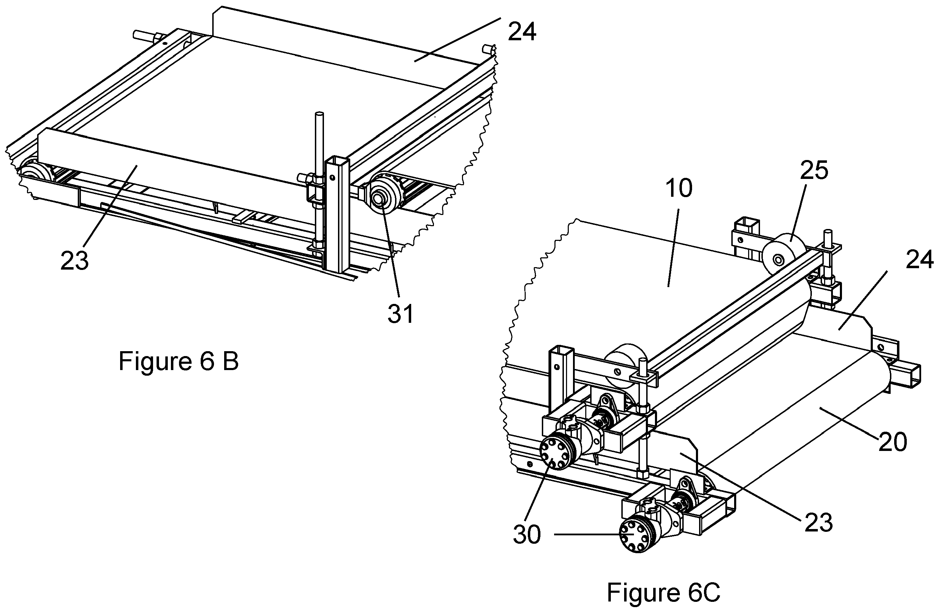

The perforations have been omitted from belts 10, 20 in Figures 1, 6A, 6B and 6C for clarity purposes.

Arrows 1 in Figures 1, 3, 4 and 6A show the direction of travel of the harvested crop.

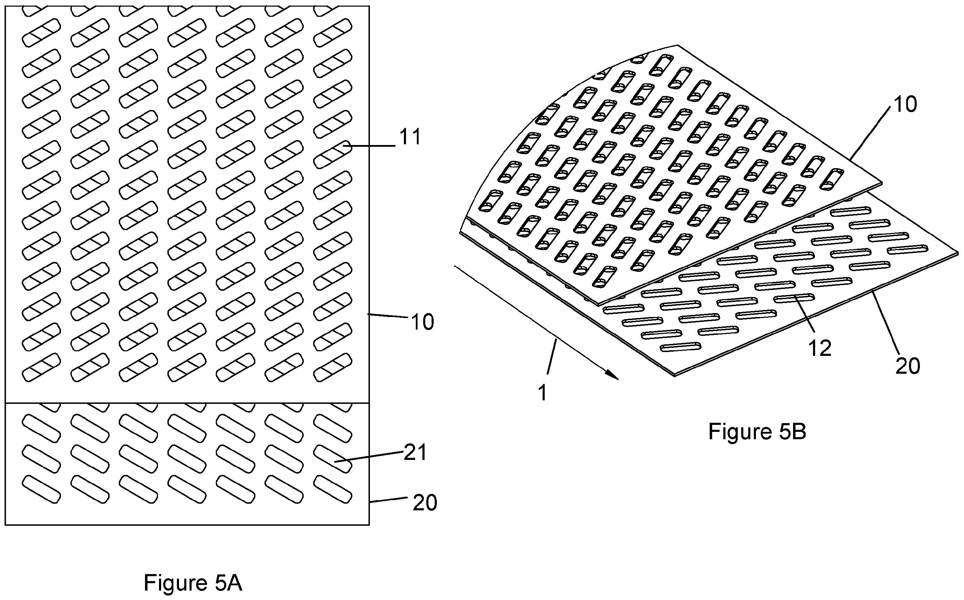

As can be seen from Figures 5A and 5B, lower belt 20 is perforated with slot shaped apertures 21 in a diagonal pattern. Slots 21 are at an angle of 30 degrees with respect to direction 1 of lower belt travel. Upper belt 10 is perforated with slot shaped apertures 11 in a diagonal pattern facing the opposite direction from apertures 21 on lower belt 20. Slots 11 are at an angle of 120 degrees with respect to direction 1 of lower belt travel and at an angle of 60 degrees with respect to slots 21.

The skewed position of slots 21 with respect to slots 11 creates a tumbling action of the crop as it moves along belt 20. The reverse pattern of slots of one belt in relation to the other belt also ensures that the crop is carried along the mid-section of lower belt 20 and not prematurely discarded from the apparatus, i.e. discarded over the sides of belts 10, 20.

Slots 11, 21 provide ridges 12 in belts 10, 20, respectively, which prevent the potatoes rolling back along belt 20 and allow soil to fall through the belt leaving the potatoes to carry on to the collection point.

Belts 10, 20 are driven by respective motors 30 which run belts 10, 20 at different speeds to each other, with lower belt 20 running at a higher speed than upper belt 10. This causes the potatoes to be rotated as they are carried up belt 20. This rotation allows soil and/or mud to be removed from the surface of the potatoes as they rotate. The soil exits through slots 11, 21 and is discarded by use of scraper bars 40 (not shown in Figure 1) positioned on frame 140 (not shown in Figure 1) on the underside of lower belt 20 at regular intervals to prevent soil build up around components of the apparatus, e.g. rollers. The potatoes then arrive at the collection point substantially free of soil and/or other debris.

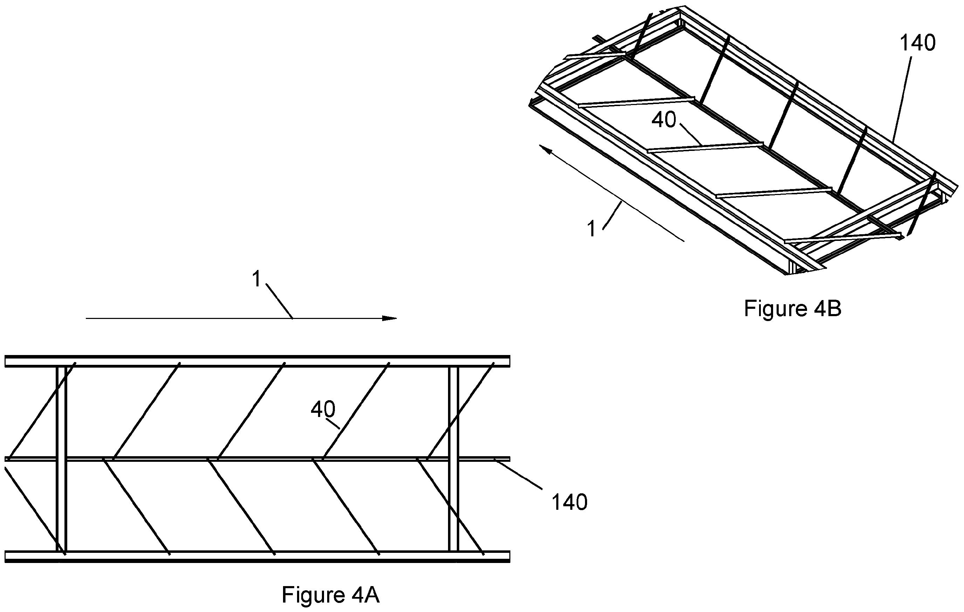

Figures 4A and 4B show a plan view and perspective view, respectively, of scraper bars 40 for installation below lower belt 20. Each scraper bar 40 is adjacent the lower surface of lower belt 20 to scrape off mud or soil adhering to the return side of the belt. When positioned on the underside of lower belt 20, scraper bars 40 also provide support for lower belt 20 and ensure an even surface across the belt, preventing sagging.

Whilst Figures 4A and 4B show ten angled scraper bars on frame 140, with five on each side, this is not to be considered limiting and any number or direction of bars is considered to fall within the scope of the invention. The distance between scraper bars 40 shown in Figures 4 A and 4B is 520mm.

Upper belt 10 is shorter than lower belt 20, with the uncovered section 22 of lower belt 20 providing an infeed area for harvested crop.

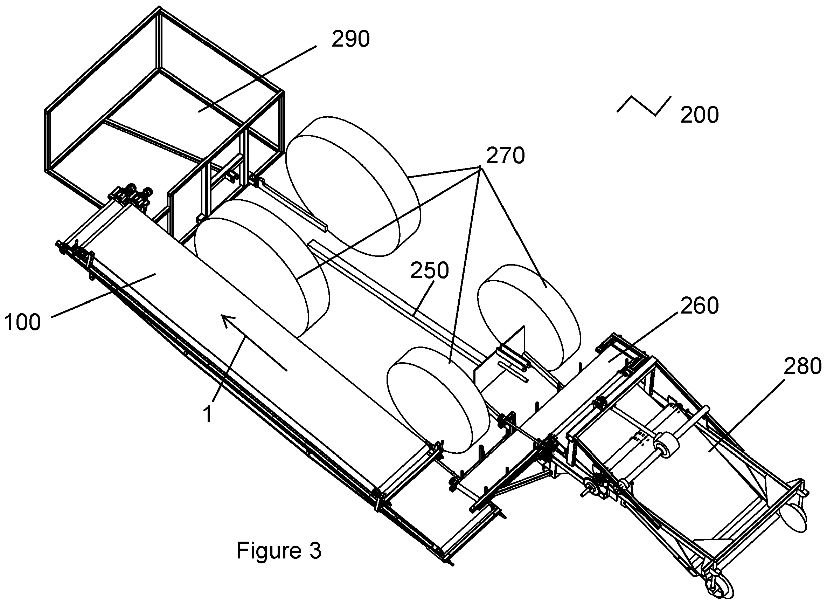

Figure 3 shows a preferred root crop harvester 200 according to the invention. Root crop harvester 200 comprises cleaning apparatus 100, chassis 250, a propulsion unit (not shown), conveyor 260, wheels 270, front digging unit 280 for harvesting crop and modular rear platform 290 for collecting cleaned crop.

Cleaning apparatus 100 is located on one side of chassis 250 to allow an operator to get in and out of root crop harvester 200 on the other side. Conveyor 260 transports crop dug by front digging unit 280 to cleaning apparatus 100.

It is to be understood that the invention is not limited to the specific details described herein which are given by way of example only and that various modifications and alterations are possible without departing from the scope of the invention as defined in the appended claims.

## Claims

1. A root crop harvester (200) comprising a cleaning apparatus (100) for separating soil from harvested root crop, the apparatus comprising an upper conveying means (10) and a substantially parallel lower conveying means (20), each conveying means (10, 20) independently comprising a driven endless belt, **characterized in that** each belt (10, 20) independently is provided with apertures (11, 21) in rows substantially parallel to each other and wherein the upper belt rows are not parallel to the lower belt rows.

2. The root crop harvester (200) of claim 1, wherein the apertures (11,21) are elongate.

3. The root crop harvester (200) of claim 2, wherein the elongate apertures (21) of the lower belt (20) are provided in rows at an angle of from about 10 degrees to about 80 degrees to the direction of lower belt travel, preferably at about 30 degrees to about 60 degrees.

4. The root crop harvester (200) of claim 2 or claim 3, wherein the elongate apertures (11) of the upper belt (10) are at an angle of about 60 degrees with respect to the elongate apertures of the lower belt (20).

5. The root crop harvester (200) of any one of the preceding claims, wherein the apertures (11, 21) of each belt (10, 20) independently are of uniform size, preferably wherein the apertures (11) of the upper belt (10) are of the same size as those of the lower belt (20).

6. The root crop harvester (200) of any one of the preceding claims, wherein each belt (10, 20) independently is made of rubber.

7. The root crop harvester (200) of any one of the preceding claims, wherein the upper belt (10) is shorter than the lower belt (20) such that there is an exposed infeed area at one end of the lower belt (10).

8. The root crop harvester (200) of any one of the preceding claims, wherein the upper and lower belts (10, 20) are independently driven by respective hydraulic motors (30).

9. The root crop harvester (200) of any one of the preceding claims, wherein the speed of each belt (10, 20) independently is adjustable

10. The root crop harvester (200) of any one of the preceding claims, wherein the upper and lower belts (10, 20) are driven at different speeds to each other, preferably wherein the lower belt (20) is driven at a higher speed than the upper belt.

11. The root crop harvester (200) of any one of the preceding claims, wherein the upper belt (10) is adapted to run in the reverse direction to the lower belt (20).

12. The root crop harvester (200) of any one of the preceding claims, wherein the apparatus further comprises one or more scraper bars (40) positioned on the underside of the lower belt (20).

13. The root crop harvester (200) of any one of the preceding claims, wherein the apparatus further comprises a scraper bar (40) positioned at one end of the upper belt (10).

14. The root crop harvester (200) of any one of the preceding claims, wherein the apparatus further comprises a scraper bar (40) positioned at one end of the upper belt (10).

15. The root crop harvester (200) of any one of the preceding claims, wherein the apparatus further comprises one or more upstanding side members adjacent the lower belt; optionally wherein the apparatus includes a propulsion unit and a steel digging web; optionally wherein the propulsion unit is a tractor and optionally wherein the apparatus has a lower infeed end and higher discharge end such that the conveying means are inclined.

## Patentansprüche

1. Hackfruchterntemaschine (200), umfassend eine Reinigungsvorrichtung (100) zum Trennen von Erde von geernteter Hackfrucht, die Vorrichtung umfassend eine obere Fördereinrichtung (10) und eine im Wesentlichen parallele untere Fördereinrichtung (20), jede Fördereinrichtung (10, 20) unabhängig umfassend ein angetriebenes Endlosband, **dadurch gekennzeichnet, dass** jedes Band (10, 20) unabhängig mit Öffnungen (11, 21) in Reihen versehen ist, die im Wesentlichen parallel zueinander sind, und wobei die oberen Bandreihen nicht parallel zu den unteren Bandreihen sind.

2. Hackfruchterntemaschine (200) nach Anspruch 1, wobei die Öffnungen (11, 21) länglich sind.

3. Hackfruchterntemaschine (200) nach Anspruch 2, wobei die länglichen Öffnungen (21) des unteren Bands (20) in Reihen in einem Winkel von etwa 10 Grad bis etwa 80 Grad zu der Richtung des unteren Bandverlaufs, vorzugsweise in einem Winkel von etwa 30 Grad bis etwa 60 Grad, bereitgestellt sind.

4. Hackfruchterntemaschine (200) nach Anspruch 2 oder Anspruch 3, wobei die länglichen Öffnungen (11) des oberen Bands (10) in einem Winkel von etwa 60 Grad zu den länglichen Öffnungen des unteren Bands (20) sind.

5. Hackfruchterntemaschine (200) nach einem der vorherigen Ansprüche, wobei die Öffnungen (11, 21) von jedem Band (10, 20) unabhängig von einheitlicher Größe sind, vorzugsweise wobei die Öffnungen (11) des oberen Bands (10) von gleicher Größe wie jene des unteren Bands (20) sind.

6. Hackfruchterntemaschine (200) nach einem der vorherigen Ansprüche, wobei jedes Band (10, 20) unabhängig aus Gummi gefertigt ist.

7. Hackfruchterntemaschine (200) nach einem der vorherigen Ansprüche, wobei das obere Band (10) kürzer ist als das untere Band (20), sodass es an einem Ende des unteren Bands (10) einen freiliegenden Einzugsbereich gibt.

8. Hackfruchterntemaschine (200) nach einem der vorherigen Ansprüche, wobei das obere und das unteren Band (10, 20) unabhängig von entsprechenden Hydraulikmotoren (30) angetrieben werden.

9. Hackfruchterntemaschine (200) nach einem der vorherigen Ansprüche, wobei die Geschwindigkeit von jedem Band (10, 20) unabhängig einstellbar ist.

10. Hackfruchterntemaschine (200) nach einem der vorherigen Ansprüche, wobei das obere und das untere Band (10, 20) mit verschiedenen Geschwindigkeiten zueinander angetrieben werden, vorzugsweise wobei das untere Band (20) mit einer höheren Geschwindigkeit angetrieben wird als das obere Band.

11. Hackfruchterntemaschine (200) nach einem der vorherigen Ansprüche, wobei das obere Band (10) angepasst ist, um in umgekehrter Richtung zu dem unteren Band (20) zu laufen.

12. Hackfruchterntemaschine (200) nach einem der vorherigen Ansprüche, wobei die Vorrichtung ferner eine oder mehrere Abstreifleisten (40) umfasst, die an der Unterseite des unteren Bands (20) positioniert sind.

13. Hackfruchterntemaschine (200) nach einem der vorherigen Ansprüche, wobei die Vorrichtung ferner eine Abstreifleiste (40) umfasst, die an einem Ende des oberen Bands (10) positioniert ist.

14. Hackfruchterntemaschine (200) nach einem der vorherigen Ansprüche, wobei die Vorrichtung ferner eine Abstreifleiste (40) umfasst, die an einem Ende des oberen Bands (10) positioniert ist.

15. Hackfruchterntemaschine (200) nach einem der vorherigen Ansprüche, wobei die Vorrichtung ferner ein oder mehrere aufrecht stehende Seitenelemente neben dem unteren Band umfasst, optional wobei die Vorrichtung eine Antriebseinheit und einen Stahlschürfsteg umfasst, wobei die Antriebseinheit optional ein Traktor ist und optional wobei die Vorrichtung ein unteres Zufuhrende und ein höheres Entladeende aufweist, sodass die Fördereinrichtungen geneigt sind.

## Revendications

1. Récolteuse de racines (200) comprenant un appareil de nettoyage (100) permettant de séparer la terre des racines récoltées, l'appareil comprenant un moyen de convoyage supérieur (10) et un moyen de convoyage inférieur sensiblement parallèle (20), chaque moyen de convoyage (10, 20) comprenant indépendamment une courroie sans fin entraînée, **caractérisée en ce que** chaque courroie (10, 20) est indépendamment pourvue d'ouvertures (11, 21) en rangées sensiblement parallèles les unes aux autres et lesdites rangées de la courroie supérieure n'étant pas parallèles aux rangées de la courroie inférieure.

2. Récolteuse de racines (200) selon la revendication 1, lesdites ouvertures (11, 21) étant allongées.

3. Récolteuse de racines (200) selon la revendication 2, lesdites ouvertures allongées (21) de la courroie inférieure (20) étant disposées en rangées suivant un angle d'environ 10 degrés à environ 80 degrés par rapport à la direction de déplacement de la courroie inférieure, de préférence d'environ 30 degrés à environ 60 degrés.

4. Récolteuse de racines (200) selon la revendication 2 ou la revendication 3, lesdites ouvertures allongées (11) de la courroie supérieure (10) formant un angle d'environ 60 degrés par rapport aux ouvertures allongées de la courroie inférieure (20).

5. Récolteuse de racines (200) selon l'une quelconque des revendications précédentes, lesdites ouvertures (11, 21) de chaque courroie (10, 20) étant indépendamment de taille uniforme, de préférence lesdites ouvertures (11) de la courroie supérieure (10) étant de la même taille que celle de la courroie inférieure (20).

6. Récolteuse de racines (200) selon l'une quelconque des revendications précédentes, chaque courroie (10, 20) étant indépendamment constituée de caoutchouc.

7. Récolteuse de racines (200) selon l'une quelconque des revendications précédentes, ladite courroie supérieure (10) étant plus courte que la courroie inférieure (20) de sorte qu'il existe une zone d'entrée exposée au niveau d'une extrémité de la courroie inférieure (10).

8. Récolteuse de racines (200) selon l'une quelconque des revendications précédentes, lesdites courroies supérieure et inférieure (10, 20) étant entraînées indépendamment par des moteurs hydrauliques respectifs (30).

9. Récolteuse de racines (200) selon l'une quelconque des revendications précédentes, la vitesse de chaque courroie (10, 20) étant indépendamment réglable.

10. Récolteuse de racines (200) selon l'une quelconque des revendications précédentes, lesdites courroies supérieure et inférieure (10, 20) étant entraînées à des vitesses différentes l'une de l'autre, de préférence ladite courroie inférieure (20) étant entraînée à une vitesse plus élevée que celle de la courroie supérieure.

11. Récolteuse de racines (200) selon l'une quelconque des revendications précédentes, ladite courroie supérieure (10) étant conçue pour se déplacer dans le sens inverse à la courroie inférieure (20).

12. Récolteuse de racines (200) selon l'une quelconque des revendications précédentes, ledit appareil comprenant en outre une ou plusieurs barres de raclage (40) positionnées sur la face inférieure de la courroie inférieure (20).

13. Récolteuse de racines (200) selon l'une quelconque des revendications précédentes, ledit appareil comprenant en outre une barre de raclage (40) positionnée au niveau d'une extrémité de la courroie supérieure (10).

14. Récolteuse de racines (200) selon l'une quelconque des revendications précédentes, ledit appareil comprenant en outre une barre de raclage (40) positionnée au niveau d'une extrémité de la courroie supérieure (10).

15. Récolteuse de racines (200) selon l'une quelconque des revendications précédentes, ledit appareil comprenant en outre un ou plusieurs éléments latéraux verticaux adjacents à la courroie inférieure ; éventuellement ledit appareil comprenant une unité de propulsion et une toile de creusement en acier ; éventuellement ladite unité de propulsion étant un tracteur et éventuellement ledit appareil comportant une extrémité d'entrée inférieure et une extrémité de déchargement supérieure de sorte que les moyens de convoyage soient inclinés.
